(19) Europäisches Patentamt

European Patent Office

Office européen des brevets

(11) **EP 0 868 242 B1**

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(21) Anmeldenummer: **96945734.0**

(22) Anmeldetag: **15.11.1996**

(51) Int. Cl.$^6$: **B23C 3/06**

(86) Internationale Anmeldenummer:
**PCT/DE96/02195**

(87) Internationale Veröffentlichungsnummer:
**WO 97/21513 (19.06.1997 Gazette 1997/26)**

(54) **VERFAHREN UND VORRICHTUNG ZUM DREHFRÄSEN**

ROTARY MILLING PROCESS AND DEVICE

PROCEDE ET DISPOSITIF DE FRAISAGE PAR ROTATION

(84) Benannte Vertragsstaaten:
**AT DE ES FR GB IT SE**

(30) Priorität: **11.12.1995 DE 19546197**

(43) Veröffentlichungstag der Anmeldung:
**07.10.1998 Patentblatt 1998/41**

(73) Patentinhaber: **Widia GmbH**
**45145 Essen (DE)**

(72) Erfinder: **GESELL, Reinhold**
**D-91629 Weihenzell (DE)**

(74) Vertreter:
**Vomberg, Friedhelm, Dipl.-Phys.**
**Schulstrasse 8**
**42653 Solingen (DE)**

(56) Entgegenhaltungen:
**FR-A- 1 600 140          US-A- 1 373 690**

**Beschreibung**

Die Erfindung betrifft ein Verfahren zum Drehfräsen von Werkstücken, wie Kurbelwellen oder ähnlichen Teilen, die während der Bearbeitung um ihre eigene Achse gedreht werden, wobei gleichzeitig mindestens zwei voneinander unabhängig arbeitende Drehfräswerkzeuge an unterschiedlichen Stellen des Werkstückes spanende Bearbeitungen ausführen.

Die Erfindung betrifft ferner eine Vorrichtung zum Drehfräsen gemäß Oberbegriff von Patentanspruch 10.

Ein Drehfräswerkzeug besteht aus einem orthogonalen Drehfräser und/oder aus einem Scheiben- oder sonstigen Zylinderkörper, dessen Drehachse parallel zur Drehachse des Werkstückes liegt. Umfangs- bzw. mantelseitig der Scheibe bzw. des Zylinders angeordnete Schneideinsätze führen sukzessive am Werkstück notwendige Schneidoperationen durch, wobei das Drehfräswerkzeug auch mit unterschiedlichen Schneideinsätzen für unterschiedliche Bearbeitungszwecke, wie Grob- und Feinarbeiten, ausgestattet sein kann.

Das Hauptanwendungsgebiet des erfindungsgemäßen Verfahrens liegt überwiegend in der Automobil- und Nutzfahrzeugindustrie, dort besonders im Bearbeiten von Kurbelwellenhaupt- und -hublager, Nockenwellen, Getrieberitzel und Achsschenkel.

Zur Bearbeitung eines gegossenen Kurbelwellenrohlings wird die betreffende Kurbelwelle an beiden Enden in Einspannfutter einer mit jeweiligen Hauptspindeln ausgerüsteten Maschine eingespannt. Die Hauptspindeln werden mit zwei synchronlaufenden Drehstrommotoren betrieben. Um mit dieser Maschine sowohl die Hauptlager als auch die Hublager, die axial versetzt angeordnet sind, bearbeiten zu können, sind die Spannfutter der Maschine in der Aufnahme in der Höhe einstellbar. Je nach Zahl der zu bearbeitenden Hauptlager oder Hublager werden nach dem Stand der Technik Drehfräswerkzeuge mittels Supporten radial auf die betreffenden Lager zu bewegt, bis die Umfangs- bzw. mantelseitig am Drehfräswerkzeug angeordneten Schneideinsätze mit dem zu bearbeitenden Werkstückteil in Eingriff kommen. Um die exzentrisch zur Kurbelwellen-Drehachse liegenden Hublager über den vollen Zylinderumfang bearbeiten zu können, ist es erforderlich, die Drehachse des Drehfräswerkzeuges auf einem Kreisbogen zu bewegen. Die gleichzeitige Bearbeitung zweier oder mehrerer Hublager durch entsprechend viele Drehfräswerkzeuge bereitet hinsichtlich der Einstellung des Werkzeugvorschubes und der jeweiligen Drehgeschwindigkeiten des Werkstückes und der Drehfräswerkzeuge keine Probleme, da jeweils gleichartige Schnittoperationen nebeneinander parallel durchgeführt werden können. Entsprechendes gilt für die gleichzeitige Bearbeitung von Hauptlagern oder die gleichzeitige Bearbeitung von Wangen, Gegengewichte oder anderen gleichartigen Teilen des Werkstückes. Die Schneideinsätze an den jeweiligen Drehfräswerkzeugen werden bei solchen Arbeiten gleich stark belastet, so daß im Regelfall von einer etwa gleich langen Standzeit aller Drehfräswerkzeuge, die für gleiche Schnittoperationen verwendet werden, ausgegangen werden kann.

Andersartige Verhältnisse liegen jedoch dann vor, wenn gleichzeitig nebeneinander ungleichartige Werkstückteile, insbesondere Kurbelwellenteile, wie z.B. Wangen einerseits und Hublager andererseits bearbeitet werden sollen. Eine konstante Drehgeschwindigkeit des Werkstückes hat den Nachteil, daß diese nur im Hinblick auf eine Zerspanungsoperation, beispielsweise die Hublagerbearbeitung, optimiert ist. Hinzu kommt, daß die jeweilige Schnittbogenlänge bei Werkstückteilen wie Wangen aufgrund der nicht mehr rotationssymmetrischen Kontur erheblich variiert.

Es ist daher Aufgabe der vorliegenden Erfindung, ein Verfahren zum Drehfräsen anzugeben, mittels desssen die Standzeit der eingesetzten Werkzeuge maximiert werden kann, wobei insbesondere ein möglichst gleichmäßiger Verschleiß aller Drehfräswerkzeuge angestrebt wird.

Diese Aufgabe wird durch das Verfahren nach Anspruch 1 gelöst, das erfindungsgemäß dadurch gekennzeichnet ist, daß die Werkstückdrehgeschwindigkeit im Hinblick auf eine optimale Zerspanungsbearbeitung eines Drehfräswerkzeuges angepaßt oder variiert wird und die Drehgeschwindigkeit des zweiten und jedes weiteren Drehfräswerkzeuges in Abhängigkeit der durch die Anpassung oder Variierung vorgegebenen Werkstückdrehgeschwindigkeit geregelt wird. Das Verfahren ist sowohl für Innen- wie für Außenfräsarbeiten anwendbar.

Das erfindungsgemäße Verfahren beruht auf der Überlegung, daß die Zerspanungsoperation eines Werkzeuges im Sinne optimaler Schnitt- und Verschleißbedingungen die Drehzahl des Werkstückes vorgibt. Da diese Werkstückdrehgeschwindigkeit im Hinblick auf die Standzeit des zweiten Werkzeuges zu schlechteren als den gewünschten Schnittleistungen und Standzeiten führt, wird die Drehgeschwindigkeit des zweiten Werkzeuges (relativ zum ersten Werkzeug) anders eingestellt bzw. geregelt, um bei vorgegebener Werkstückdrehgeschwindigkeit auch hier optimale Zerspanungsoperationen zu erhalten. Vereinfacht ausgedrückt liefert das erste Drehfräswerkzeug die Master-Vorgabe, der das zweite Werkzeug durch die betreffende Regelung sklavenartig folgt (Master-Slave-Prinzip).

Weiterentwicklungen des erfindungsgemäßen Verfahrens sind in den Unteransprüchen beschrieben.

Vorzugsweise wird das erfindungsgemäße Verfahren dahin variiert, daß für jede Zerspanungsbearbeitung der Drehfräswerkzeuge jeweils in zeitlichen Abständen die optimale Werkstückdrehgeschwindigkeit ermittelt und dann die niedrigste der ermittelten Werkstückdrehgeschwindigkeiten eingestellt wird, wobei die Drehgeschwindigkeiten der anderen Drehfräswerkzeuge, bei denen jeweils höhere, vorzugsweise optimale Werkstückdrehgeschwindigkeiten ermittelt worden sind, entsprechend geregelt werden. Diese Maßnahme geht von der Überlegung aus, daß nicht nur ein bestimmtes Drehfräswerkzeug als die Drehgeschwindigkeit des Werkstückes bestimmend angenommen werden soll, sondern daß während der Bearbeitung auch das dominante Master-Werkzeug bzw. die betreffende Zerspanungsoperation wechseln kann, nämlich dergestalt, daß jeweils die niedrigst mögliche Werkstückdrehgeschwindigkeit gewählt wird. Im Falle von zwei gleichzeitigen Bearbeitungen kann zunächst der Fall vorliegen, daß die erste Bearbeitung hinsichtlich der Werkstückdrehgeschwindigkeit dominant ist und bei der zweiten Bearbeitung die Werkzeugdrehgeschwindigkeit entsprechend der Vorgabe der ersten Zerspanungsbearbeitung nachgeregelt wird, wohingegen während der Bearbeitung ab einem gewissen Zeitpunkt, bei dem sich aus der zweiten Bearbeitung eine niedrigere Werkstückdrehgeschwindigkeit als optimal ergibt, die zweite Bearbeitung dominant wird und gleichzeitig die erste Bearbeitung hinsichtlich der Werkzeugdrehgeschwindigkeit abhängig von der dann niedrigen Werkstückdrehgeschwindigkeit geregelt wird. Im Rahmen der beschriebenen Weiterentwicklung der Erfindung gibt es zusätzlich die Möglichkeit, die höhere Werkstückdrehgeschwindigkeit unterhalb der ermittelten optimalen Werkstückdrehgeschwindigkeit zu wählen, wobei die höhere Werkstückdrehgeschwindigkeit dann stets über einem festgelegten unteren Grenzwert liegen soll bzw. hierunter nicht absinken soll.

Nach einer weiteren Ausgestaltung des erfindungsgemäßen Verfahrens wird vorzugsweise bei allen gleichzeitig durchgeführten Zerspanungsbearbeitungen durch den Drehfräswerkzeugvorschub eine konstante Spanungsdicke von 0,1 bis 0,3 mm, weiterhin vorzugsweise von 0,2 bis 0,25 mm, eingestellt. Hiermit trägt man der erfindungsgemäßen Erkenntnis Rechnung, daß niedrigere als auch höhere Spanungsdicken jeweils zu geringeren Standzeiten führen.

Vorzugsweise wird bei zwei Drehfräswerkzeugen, die gleichzeitig Zerspanungsbearbeitungen durchführen, aus der vorgegebenen Spanungsdicke und der konstanten Drehgeschwindigkeit eines ersten Drehfräswerkzeuges in Abhängigkeit von Aufmaß, insbesondere bei der Spanungsbearbeitung einer Wange einer Kurbelwelle, das Geschwindigkeitsprofil des Werkstückes im Hinblick auf eine größtmögliche Standzeit des Drehfräswerkzeuges ermittelt und die Drehgeschwindigkeit des zweiten Drehfräswerkzeuges entsprechend diesem Geschwindigkeitsprofil geregelt. Diese Weiterentwicklung des Verfahrens schließt ein, daß die Drehgeschwindigkeit des Werkstückes während der Zerspanungsoperation variiert wird, ohne daß hierbei die Führungsrolle des angenommenen ersten Drehfräswerkzeuges verlassen wird, zumindest so lange, bis sich aus der zweiten Zerspanungsoperation eine im Hinblick auf die Standzeitoptimierung geringere Werkstückdrehgeschwindigkeit ergibt, die dann zu einer Änderung der Führungsrolle vom ersten Bearbeitungsvorgang zum zweiten Bearbeitungsvorgang führt.

Vorzugsweise wird die Drehgeschwindigkeitsänderung des Werkstückes linear zwischen zwei Einstellungen geändert, was bei starken Aufmaßänderungen am Bearbeitungsort eines Werkstückes entsprechend kürzere Anpassungszeiträume der Werkstückdrehgeschwindigkeit ebenso einschließt wie relativ hierzu längere Drehgeschwindigkeitsanpassungen des Werkstückes bei geringen Aufmaßänderungen. Insbesondere werden die zeitlichen Abstände, zu denen jeweils eine optimale Werkstückdrehgeschwindigkeit ermittelt wird, in Abhängigkeit der Änderung der zu bearbeitenden Werkstückkonturen oder Schnittbogenlängen, insbesondere der Wangen und der hierdurch vorgegebenen Schnittbogenlängen abgestimmt.

Vorzugsweise wird das erfindungsgemäße Verfahren bei der gleichzeitigen Nebeneinander-Bearbeitung von Hubzapfen, Hauptlagerzapfen und/oder Wangen an einer Kurbelwelle eingesetzt.

Nach einer weiteren Ausgestaltung der Erfindung wird jedes Werkzeug auf mindestens einer Achse in Abhängigkeit vom Drehwinkel des Werkstückes so nachgeführt, daß sich durch bzw. nach der spanenden Bearbeitung eine zylindrische Kontur (bei Hublagern) ergibt. Die Schnittbogenlänge, d.h., die mit den entsprechenden Schneideinsätzen im Eingriff befindliche Länge des Werkzeuges beträgt in bezug auf seinen Gesamtumfang nur 1/10 bis 1/1000 des Gesamtumfanges.

Nach einer weiteren Ausgestaltung der Erfindung werden die Schneideinsätze auf zwei Drehfräswerkzeuge so verteilt, daß ein erstes Werkzeug die rechte Kontur einschließlich der Hälfte eines Zapfens und ein zweites Werkzeug die linke Seite der Kontur einschließlich der Hälfte des Zapfens bearbeitet. Vorzugsweise wird als Drehfräswerkzeug ein orthogonalger Drehfäser eingesetzt.

Zur Optimierung der Zerspanungsbedingungen werden die an einem Drehfräswerkzeug befindlichen Schneideinsätze derart angeordnet bzw. in bezug auf das Werkstück so geführt, daß sich ein effektiver Spanwinkel zwischen -5° und +15°, vorzugsweise -5° bis +5°, in bezug auf das Werkstück ergibt. Der Rückspanwinkel sollte zwischen 0° und 10° liegen. Die Summe des Freiwinkels und des Schneideinsatzkeilwinkels liegt zwischen 75° und 95°, vorzugsweise bei maximal 85° bis 95°.

Während der Bearbeitung von exzentrisch zur Werkstückdrehachse liegenden Teilen, wie z.B. Hublagern, ergibt sich durch die Nachführung des Werkzeuges in nur einer Achse bei gleichförmiger Drehbewegung und bei gleichem Aufmaß eine ungleichmäßige Spanungsdicke. Nach einer Weiterentwicklung des erfindungsgemäßen Verfahrens ist vorgesehen, diese vorhersehbare Ungleichmäßigkeit zu gleichen Spandicken zu kompensieren.

Die zur Durchführung des erfindungsgemäßen Verfahrens verwendete Vorrichtung nach Patentanspruch 10 besitzt mindestens zwei mit Schneideinsätzen versehene Drehfräswerkzeuge, die Hochgeschwindigkeitsfräser sind, wobei für jedes Drehfräswerkzeug ein Support mit einem Drehantrieb vorgesehen ist und die Drehantriebe jeweils mit einer Drehzahlregelungen verbunden sind. Vorzugsweise weist ein Support zwei Schlitten auf, die eine Verfahrbarkeit des Werkzeuges in zwei zueinander senkrechten Richtungen ermöglichen. Hierdurch werden auch Fertigungen von Hinterschneidungen etc. möglich.

Das geschilderte Verfahren sowie die beschriebene Vorrichtung liefern den Vorteil, daß die Werkstückbearbeitungsgesamtzeit, die Taktzeit, erheblich verringert werden kann, da nebeneinander auch ungleichartige Teile, d.h., z.B. Hublager einerseits und Wangen andererseits bearbeitet werden können. Die erfindungsgemäße Verfahrenstechnik läßt eine Steigerung der Oberflächenqualität und der Maßgenauigkeit des fertig bearbeiteten Werkstückes erreichen, wobei hohe Zerspanungskräfte und hohe Schneidwerkzeugerwärmungen gleichermaßen vermieden werden.

Ausführungsbeispiele der Erfindung sind in den Zeichnungen dargestellt. Es zeigen

Fig. 1    eine Prinzipskizze der erfindungsgemäßen Vorrichtung mit eingespannter Kurbelwelle,

Fig. 2    eine schematische Darstellung der verfahrensgemäßen Bearbeitungsweise,

Fig. 3    in einer schematischen Darstellung die Arbeitsweise von zwei Schneideinsätzen,

Fig. 4    die Arbeitsweise jeweils zweier Schneideinsätze bzw. Schneideinsatzpaare und

Fig. 5    ein Drehzahldiagramm.

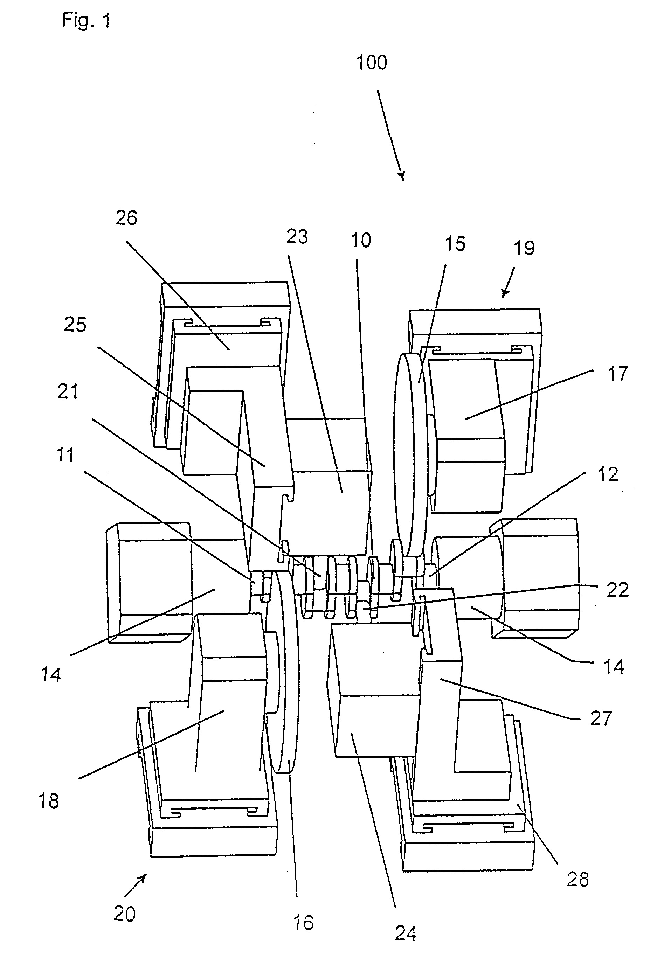

In Fig. 1 ist eine Vorrichtung 100 zur spanenden Bearbeitung rein schematisch im Hinblick auf die im Zusammenhang mit der vorliegenden Erfindung wichtigsten Bauteile dargestellt, die alle in einem in der Zeichnung nicht dargestellten Maschinengestell angeordnet sind. Das Werkstück 10, nämlich eine Kurbelwelle, ist mit ihren Enden 11 und 12 in antreibbaren, drehbaren Einspannfuttern 13, 14 so eingespannt, daß sie um ihre Mittellängsachse drehbar ist. Zur Bearbeitung dienen die scheibenförmigen Drehfräswerkzeuge 15, 16, die über entsprechende Antriebe 17, 18 antreibbar sind, wobei jeder Antrieb 17, 18 auf einem Support 19, 20 gelagert ist, wodurch das Werkzeug auf einer Achse dem Werkstück 10 nachgeführt werden kann. Weiterhin sind in der Vorrichtung 100 zwei orthogonale Drehfäser 21, 22 angeordnet, die ebenfalls über entsprechende Antriebe 23, 24 drehantreibbar sind. Jeder orthogonale Drehfräser 21, 22 ist auf einem Support mit jeweils zwei Schlitten 25, 26; 27, 28 gelagert, so daß eine Nachführung jedes orthogonalen Drehfräsers 21, 22 auch bei sich drehender Kurbelwelle möglich ist. Mit der dargestellten Vorrichtung ist die gleichzeitige Bearbeitung von vier Kurbelwellenstellen möglich.

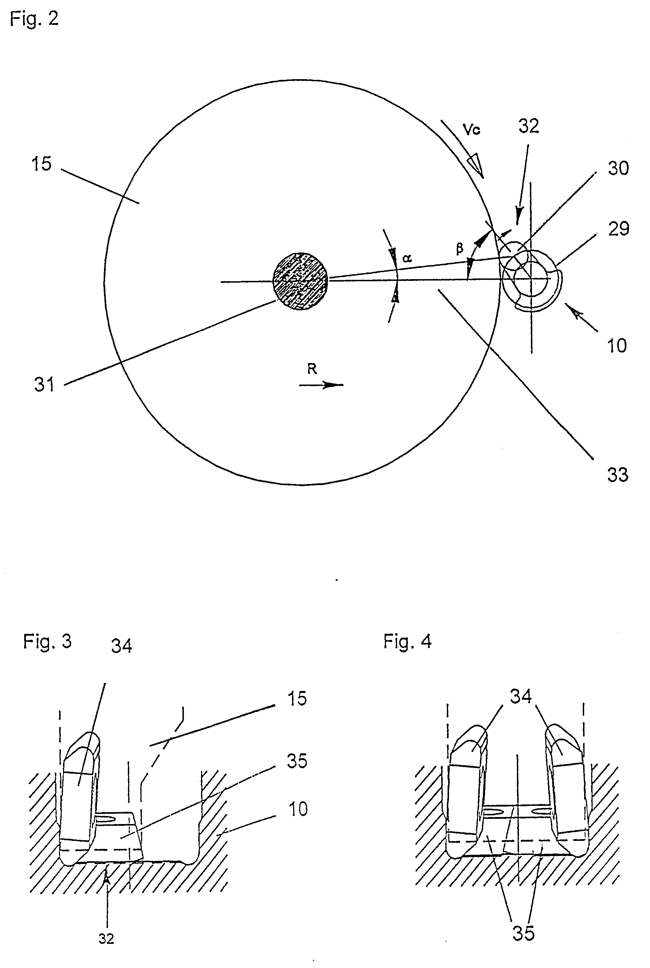

Die Arbeitsweise eines Drehfräswerkzeuges, wie es in der Vorrichtung 100 Verwendung finden kann, ist rein schematisch in Fig. 2 dargestellt. Um eine spanende Bearbeitung eines außerhalb des Drehzentrums 29 des Werkstückes 10 exzentrisch angeordneten Kurbelwellenhublagers 30 durchzuführen, wird das scheibenförmige Drehfräswerkzeug 15 um seine Mittelachse 31 mit konstanter oder variabler Drehzahl angetrieben, so daß die in Fig. 2 nicht dargestellten, auf dem Außenumfang angeordneten Schneideinsätze mit einer hohen Bearbeitungsgeschwindigkeit $v_c$ an der Bearbeitungsstelle 32 vorbeigeführt werden. Die Bearbeitungsstelle 32 wandert mit der Drehung des Werkstückes 10 um das Drehzentrum 29 und wird aus einer Horizontalebene 33 um einen Winkel β ausgelenkt. Zur Nachführung des Werkzeuges 15 wird dieses in der Horizontalebene 33 in Richtung R bewegt, so daß die im Hinblick auf die Mittelachse 31 des Werkzeuges 15 und den Winkel α ausgelenkte Bearbeitungsstelle 32 immer erreicht wird. Das Werkzeug 15 wird dabei auf der in der Horizontalebene 33 liegenden Achse der Werzeugnachführbewegung in Abhängigkeit vom Drehwinkel β des Werkstückes 10 so nachgeführt, daß sich nach der spanenden Bearbeitung an der Bearbeitungsstelle 32 eine zylindrische Kontur ergibt. Jeweils hohe Schnittgeschwindigkeiten sowie Spanungsdicken zwischen 0,2 bis 0,25 mm bewirken geringe Kräfte auf das Werkstück 10 bzw. einen geringstmöglichen Verschleiß der Schneideinsätze, worauf bei der Erläuterungen des erfindungsgemäßen Verfahrens noch eingegangen wird.

In Fig. 3 ist in einer rein schematischen, teilweise geschnittenen Darstellung angedeutet, wie unterschiedliche Schneideinsätze 34, 35 auf einem Werkzeug 15 angeordnet sein können, um an einer Bearbeitungsstelle 32 eines Werkstückes 10 eine zylindrische Kontur, nämlich speziell die Zapfenbarbeitung eines Kurbelwellenhublagers durchzuführen. In der gezeigten Darstellung erzeugt der Schneideinsatz 34 einen Unterstich, während der Schneideinsatz 35 den Außendurchmesser des Zapfens erzeugt. Die komplette Kontur, nämlich zwei Unterstiche und die Zapfenbearbeitung kann durch ein einziges Werkzeug 15 in einem Schnittvorgang gemäß Fig. 4 erzeugt werden, wobei ggf. zur eventuellen Verschleißkorrektur notwendigerweise ein Zurücksetzen, axiales Verfahren und erneutes Einstechen an entsprechender Stelle erfolgt.

Wenn die Erzeugung der Zapfenbreite mit zwei Werkzeugen realisiert wird, so sollte der Formfehler im Überschnitt, der möglicherweise durch Rundlauffehler des Werkzeuges 15 oder durch einen kinematischen Fehler des Maschinensupports verursacht wird, möglichst gering gehalten werden. Hierzu besitzt der Schneideinsatz 35 einen positiven Spanwinkel und ist im Hinblick auf das Werkstück unter einem effektiven Spanwinkel $\gamma_f$ zwischen -5° und +15°, vorzugsweise -5° bis +5°, in bezug auf das Werkstück angeordnet bzw. geführt. Der Rückspanwinkel (axiale Spanwinkel) $\gamma_p$ ist positiv und kann bis zu 10° betragen. Die Summe des Freiwinkels α (bezogen auf das Werkstück)

und des Keilwinkel $\beta$ des Schneideinsatzes ist liegt zwischen 75° und 95°, vorzugsweise 85° und 95°.

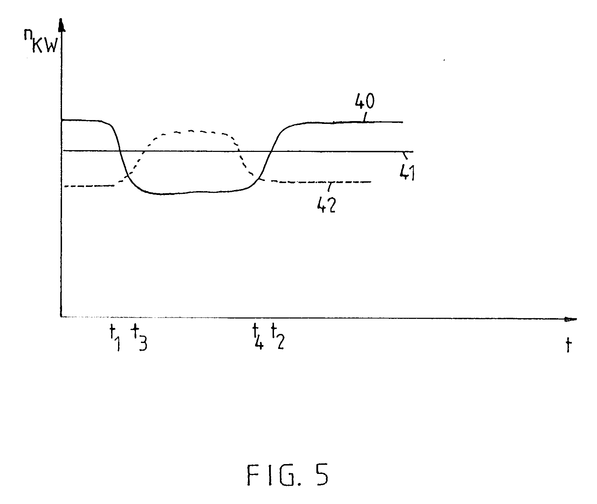

Das erfindungsgemäße Verfahren wird am Beispiel einer Kurbelwellenbearbeitung im folgenden erläutert, bei der zwei unabhängige Drehfräswerkzeuge gleichzeitig nebeneinander eingesetzt werden, wobei das erste Werkzeug zur Bearbeitung einer Kurbelwellenwange und das zweite Werkzeug zur Bearbeitung eines Hubzapfens eingesetzt wird. Die Kurbelwellenwange soll im vorliegenden Fall ein variables Aufmaß besitzen. Zur ersten Optimierung der Standzeit wird bei dem Kurbelwellenbearbeitungswerkzeug eine konstante Spanungsdicke $h_{max}$ und eine konstante Drehzahl $v_c$ dieses Wangenbearbeitungswerkzeuges vorgegeben. Hieraus wird je nach Aufmaß das optimale Geschwindigkeitsprofil 40 für die Werkstückdrehgeschwindigkeit entsprechend dem Aufmaß bzw. in Abhängigkeit der Zeit vorgegeben (siehe Fig. 5). Zur Kurbelwellenzapfenbearbeitung würde eine konstante Drehgeschwindigkeit 41 optimal sein. Vorgegeben ist auch hier eine konstante Spanungsdicke $h_{max}$ von 0,2 bis 0,25 mm. Das Aufmaß ist bei dem zu bearbeitenden Zapfen bzw. Zapfenstück ebenfalls konstant. Da die Drehzahl des Werkstückes durch das Wangenbearbeitungswerkzeug bereits vorgegeben ist, wird entsprechend dieser Drehgeschwindigkeit die Drehgeschwindigkeit des Zapfenbearbeitungswerkzeuges variabel geregelt.

Nach einer verbesserten Ausführungsform des Verfahrens ergibt sich aus dem Drehzahlverlauf 41 bzw. 40, daß bis zum Zeitpunkt $t_1$ die Drehzahl 41 die niedrigere ist, weshalb bis zum Zeitpunkt $t_1$ das Werkstück, nämlich die Kurbelwelle mit dieser niedrigeren Drehzahl 41 betrieben wird. Während dieser Zeit ist das Zapfenbearbeitungswerkzeug dominant, d.h., das Wangenbearbeitungswerkzeug wird hinsichtlich seiner Drehgeschwindigkeit in Abhängigkeit der bis zum Zeitpunkt $t_1$ gewählten Werkstückdrehgeschwindigkeit geregelt. Zwischen den Zeitpunkten $t_1$ und $t_2$ ergibt sich aus der variablen Wangenkontur eine für optimale Schnittbedingungen kleinere Drehgeschwindigkeit 40, weshalb in dem Zeitraum $t_2 - t_1$ das Wangenbearbeitungswerkzeug dominant ist und die Drehzahl des Zapfenbearbeitungswerkzeuges entsprechend geregelt wird. Da die Drehzahl des Werkstückes zwischen den Zeitpunkten $t_1$ und $t_2$ variiert, ist hier auch eine entsprechende Variation der Drehgeschwindigkeit des Zapfenbearbeitungswerkzeuges erforderlich, die stufenweise erfolgt, d.h., in Zeiträumen, in denen die Drehzahländerung der Kurbelwelle stärker variiert, werden die Anpassungen in kürzeren Zeitabständen, jeweils linear vorgenommen, während sie in Zeiten geringerer Änderungen in größeren Zeitabständen, jeweils linear, vorgenommen wird. Nach Erreichen des Zeitpunktes $t_2$ wird das Zapfenbearbeitungsdrehwerkzeug wieder dominant und in entsprechender Weise die Drehzahl des Wangenbearbeitungswerkzeuges nachgeregelt, was sich aus den dann höheren Drehzahlwerten der Kurve 40 gegenüber der Geraden 41 ergibt.

Entsprechendes ergäbe sich auch bei der Bearbeitung von zwei Werkstücken mit variablem Aufmaß, deren jeweils isoliert betrachtete Geschwindigkeitsprofile für die Werkstückdrehzahl durch die Kurven 40 bzw. 42 vorgegeben sein soll. Auch hier bestimmt bis zum Zeitpunkt $t_3$ die Drehzahl 42 die tatsächlich einzustellende Drehzahl des Werkstückes, zwischen den Zeiten $t_3$ und $t_4$ wird die Drehzahl entsprechend der Drehzahlkurve 40 gewählt und nach dem Ablauf des Zeitpunktes $t_4$ wieder die Drehzahl 42, wobei jeweils das andere Bearbeitungswerkzeug hinsichtlich seiner Drehzahlregelung nachregelbar ist, während das jeweilige "Führungs"- oder "Master"-Werkzeug mit konstanter Drehzahl betrieben wird.

Der Vorteil der vorliegenden Erfindung besteht darin, daß mit dem erfindungsgemäßen Verfahren gleichzeitig unterschiedliche Werkstückbearbeitungen in kürzeren Taktzeiten als bisher vorgenommen werden können und die Standzeit jedes Drehfräswerkzeuges optimiert werden kann.

In einem konkreten Ausführungsbeispiel, nämlich bei der Wangenbearbeitung, ergibt sich der Zahnvorschub in Abhängigkeit von dem Fertigdurchmesser dw, dem Fräsbahndurchmesser dB, dem Aufmaßdurchmesser da, dem Fräserdurchmesser D (Durchmesser des Drehfräswerkzeuges) und der Spanungsdicke $h_{max}$ gemäß folgender Formel:

$$fz = dw \cdot \frac{\pi}{360} \cdot \left[ acos\left[ \frac{(dB)^2 - (da)^2 - D^2}{2 \cdot dB \cdot da} \right] \cdot \frac{180}{\pi} - acos\left[ \frac{(dB)^2 + (da)^2 - (D - 2.hmax)^2}{2 \cdot db \cdot da} \right] \cdot \frac{180}{\pi} \right]$$

In einem speziellen Anwendungsbeispiel ist unter Vorausgabe der nachfolgend aufgeführten Kurbelwellendaten, der Werkzeugdaten und der Schnittdaten jeweils die Werkzeugdrehzahl, der Fräserbahndurchmesser sowie die Bearbeitungszeit in nach dem Stand der Technik üblicher Weise bestimmt worden. Hieraus ergab sich insbesondere das aus der Tabelle 1 ersichtliche Geschwindigkeitsprofil für die Vorschubgeschwindigkeit $V_f$ und hieraus das Drehzahlprofil der Kurbelwelle $n_{KW}$.

Umgekehrt läßt sich bei Vorgabe der sich variierenden Kurbelwellendrehzahl die Drehgeschwindigkeit des zweiten Drehfräswerkzeuges, das z.B. zur Bearbeitung eines Hublagers eingesetzt wird, berechnen.

Tabelle 1

| Kurbelwellendaten | | | Wange Schnitt 1 | Schnitt 2 | Hublager |
|---|---|---|---|---|---|
| Fertigdurchmesser | $d_W$ | mm | 67,0 | | 57 |
| Aufmaßdurchmesser | | | 244 | | 4 |
| Werkzeugdaten | | | | | |
| Fräserdurchmesser | D | mm | 800 | | |
| Zähnezahl | $z_e$ | | 100 | | 50 |
| Schnittdaten | | | | | |
| max. Spandicke | $h_{max}$ | mm | 0,14 | | 0,13 |
| Schnittgeschwindigkeit | $v_c$ | m/min | 300 | | 500 |
| Eilganggeschwindigkeit | $v_E$ | mm/min | 10000 | | 10000 |
| Drehzahl | n(WZ) | 1/min | 119 | | 199 |
| Fräserbahndurchmesser | $d_3$ | mm | 867 | | 857 |
| Gesamtzeit | | s | 11,9 | | 4,7 |
| | | | ▓▓▓ | | |

| Winkel | | | 0 | 44 | 45 | 60 | 70 | 80 | 90 | 100 | 140 | 150 | 160 |
|---|---|---|---|---|---|---|---|---|---|---|---|---|---|
| Aufmaßradius | ra | mm | 36 | 36 | 94 | 104 | 113 | 120 | 121 | 122 | 118 | 114 | 110 |
| Aufmaßdurchmesser | da | mm | 72,0 | 72,0 | 188,0 | 208,0 | 226,0 | 240,0 | 242,0 | 244,0 | 236,0 | 228,0 | 220,0 |
| Vorschub/Zahn | fz(dw) | mm | 0,347 | 0,347 | 0,052 | 0,046 | 0,042 | 0,039 | 0,039 | 0,039 | 0,040 | 0,042 | 0,043 |
| Vorschubgeschwindigk. | vf(dw) | mm/min | 4137 | 4137 | 616 | 550 | 503 | 471 | 467 | 463 | 480 | 498 | 517 |
| Drehzahl | n(KW) | 1/min | 19,65 | 19,65 | 2,93 | 2,61 | 2,39 | 2,24 | 2,22 | 2,20 | 2,28 | 2,37 | 2,46 |
| Schnittbogenlänge | l | mm | 12,8 | 12,8 | 84,5 | 94,8 | 104,0 | 111,1 | 112,1 | 113,1 | 109,0 | 105,0 | 100,9 |
| Zähne im Eingriff | Ze | | 0,51 | 0,51 | 3,36 | 3,77 | 4,14 | 4,42 | 4,46 | 4,50 | 4,34 | 4,18 | 4,02 |
| Hauptzeit | th | s | 0,00 | 0,37 | 0,01 | 0,90 | 0,67 | 0,72 | 0,75 | 0,75 | 2,98 | 0,72 | 0,69 |

| Winkel | | | 178 | 179 | 190 | 200 | 210 | 220 | 230 | 240 | 250 | 260 | 360 |
|---|---|---|---|---|---|---|---|---|---|---|---|---|---|
| Aufmaßradius | ra | mm | 109 | 60 | 50 | 46 | 43 | 38 | 36 | 36 | 36 | 36 | 36 |
| Aufmaßdurchmesser | da | mm | 218,0 | 120,0 | 100,0 | 92,0 | 86,0 | 76,0 | 72,0 | 72,0 | 72,0 | 72,0 | 72,0 |
| Vorschub/Zahn | fz(dw) | mm | 0,044 | 0,091 | 0,122 | 0,143 | 0,168 | 0,253 | 0,347 | 0,347 | 0,347 | 0,347 | 0,347 |
| Vorschubgeschwindigk. | vf(dw) | mm/min | 523 | 1083 | 1453 | 1711 | 2002 | 3021 | 4137 | 4137 | 4137 | 4137 | 4137 |
| Drehzahl | n(KW) | 1/min | 2,48 | 5,15 | 6,90 | 8,13 | 9,51 | 14,35 | 19,65 | 19,65 | 19,65 | 19,65 | 19,65 |
| Schnittbogenlänge | l | mm | 99,9 | 47,9 | 35,7 | 30,4 | 26,0 | 17,4 | 12,8 | 12,8 | 12,8 | 12,8 | 12,8 |
| Zähne im Eingriff | Ze | | 3,98 | 1,91 | 1,42 | 1,21 | 1,03 | 0,69 | 0,51 | 0,51 | 0,51 | 0,51 | 0,51 |
| Hauptzeit | th | s | 1,21 | 0,04 | 0,30 | 0,22 | 0,19 | 0,14 | 0,10 | 0,08 | 0,08 | 0,08 | 0,85 |

**Patentansprüche**

1. Verfahren zum Drehfräsen von Werkstücken (10), wie Kurbelwellen oder ähnlichen Teilen, die während der Bearbeitung um ihre eigene Achse gedreht werden, wobei gleichzeitig mindestens zwei voneinander unabhängig arbeitende Drehfräswerkzeuge (15, 16, 21, 22) an unterschiedlichen Stellen des Werkstückes (10) spanende Bearbeitungen ausführen,
   **dadurch gekennzeichnet**,
   daß die Werkstückdrehgeschwindigkeit ($n_{KW}$) im Hinblick auf eine optimale Zerspanungsbearbeitung eines Drehfräswerkzeuges (15, 16, 21, 22) angepaßt oder variiert wird und die Drehgeschwindigkeit des zweiten und jedes weiteren Drehfräswerkzeuges (15, 16, 21, 22) in Abhängigkeit der durch die Anpassung oder Variierung vorgegebenen Werkstückdrehgeschwindigkeit ($n_{KW}$) geregelt wird.

2. Verfahren nach Anspruch 1, dadurch gekennzeichnet, daß für jede Zerspanungsbearbeitung der Drehfräswerkzeuge (15, 16, 21, 22) jeweils in zeitlichen Abständen die optimale Werkstückdrehgeschwindigkeit ermittelt und dann die niedrigste der ermittelten Werkstückdrehgeschwindigkeiten eingestellt wird, wobei die Drehgeschwindigkeiten der anderen (15, 16, 21, 22) bei denen jeweils höhere Werkstückdrehgeschwindigkeiten ermittelt worden sind, entsprechend geregelt werden, wobei vorzugsweise die jeweils höhere Werkstückgeschwindigkeit die ermittelte optimale Geschwindigkeit oder eine hierunter, aber über einem unteren Grenzwert liegende Geschwindigkeit sein kann und/oder daß bei allen gleichzeitig durchgeführten Zerspanungsbearbeitungen durch den Drehfräsvorschub eine konstante Spanungsdicke ($h_{max}$) von 0,1 bis 0,3 mm, vorzugsweise 0,2 bis 0,25 mm, eingestellt wird.

3. Verfahren nach einem der Ansprüche 1 oder 2, dadurch gekennzeichnet, daß bei zwei Drehfräswerkzeugen, die gleichzeitig Zerspanungsbearbeitungen durchführen, aus der vorgegebenen Spanungsdicke ($h_{max}$) und der konstanten Drehgeschwindigkeit ($v_c$) eines ersten Drehfräswerkzeuges in Abhängigkeit vom Aufmaß, insbesondere bei der Spanungsbearbeitung einer Wange an einer Kurbelwelle, das Geschwindigkeitsprofil (40) des Werkstückes im Hinblick auf eine größtmögliche Standzeit des Drehfräswerkzeuges ermittelt wird und die Drehgeschwindigkeit des zweiten Drehfräswerkzeuges entsprechend diesem Geschwindigkeitsprofil (40) geregelt wird.

4. Verfahren nach einem der Ansprüche 1 bis 3, dadurch gekennzeichnet, daß die Drehgeschwindigkeitsänderungen des Werkstückes linear zwischen zwei Einstellungen geändert werden und/oder daß die zeitlichen Abstände, zu denen jeweils eine optimale Werkstückdrehgeschwindigkeit ermittelt wird, in Abhängigkeit der Änderung der zu bearbeitenden Werkstückskonturen, insbesondere der Wangenkontur, abgestimmt werden.

5. Verfahren nach einem der Ansprüche 1 bis 4, dadurch gekennzeichnet, daß die Drehfräswerkzeuge (15, 16, 21, 22) nebeneinander zur gleichzeitigen Bearbeitung von Hubzapfen, Hauptlagerzapfen und/oder Wangen an einer Kurbelwelle (10) eingesetzt werden und/oder daß jedes Werkzeug auf mindestens einer Achse in Abhängigkeit vom Drehwinkel des Werkstückes (10) so nachgeführt wird, daß sich durch bzw. nach der spanenden Bearbeitung eine zylindrische Kontur ergibt.

6. Verfahren nach einem der Ansprüche 1 bis 5, dadurch gekennzeichnet, daß die Schnittbogenlänge, d.h., die mit den entsprechenden Schneideinsätzen im Eingriff befindliche Länge des Werkzeuges in bezug auf seinen Gesamtumfang nur 1/10 bis 1/1000 des Gesamtumfanges beträgt.

7. Verfahren nach einem der Ansprüche 1 bis 6, dadurch gekennzeichnet, daß in einem ersten Schritt alle rechten Konturen und in einem zweiten Schritt alle linken Konturen des Profiles, d.h. der Fertigkontur, gefertigt werden und/oder daß ein Bearbeitungsschritt als orthogonales Drehfräsen durchgeführt wird.

8. Verfahren nach einem der Ansprüche 1 bis 7, dadurch gekennzeichnet, daß die Schneideinsätze unter einem effektiven Spanwinkel ($\gamma_f$) zwischen -5° und +15°, vorzugsweise -5° bis +5°, in bezug auf das Werkstück (10) geführt werden und/oder daß der Rückspanwinkel ($\gamma_p$) ≥0°, vorzugsweise bis maximal +10° beträgt.

9. Verfahren nach einem der Ansprüche 1 bis 8, dadurch gekennzeichnet, daß die Summe des Freiwinkels ($\alpha$) und des Keilwinkels ($\beta$) der Schneideinsätze 75° bis 95°, vorzugsweise 85° bis 95°, ist und/oder daß bei der Bearbeitung von exzentrisch zur Werkstückdrehachse liegenden zylinderförmigen Werkstückteilen, wie Hublagern, die sich aus der Führung des Drehfräswerkzeuges relativ zum Werkstück ergebenden unterschiedlichen Spanungsdicken durch Variation des Vorschubes und/oder der Drehgeschwindigkeit des Drehfräswerkzeuges kompensiert werden.

**10.** Vorrichtung zum Drehfräsen mit mehreren mit einem Drehantrieb vorgesehenen Supporten (19, 20) für die mit Schneideinsätzen versehenen Werkzeuge (15, 16 ; 21, 22), dadurch gekennzeichnet, daß die Drehantriebe für die Werkzeuge jeweils mit einer Drehzahlregelung verbunden sind, wobei vorzugsweise mindestens ein Support zwei Schlitten (25, 26; 27, 28) aufweist, die eine Verfahrbarkeit des Werkzeuges in zwei zueinander senkrechten Richtungen ermöglicht.

**Claims**

**1.** Method of rotary milling workpieces (10), such as crankshafts or similar parts, that are rotated during machining about their own axes, whereby simultaneously at least two independently working rotary-milling tools (15, 16, 21, 22) perform machining operations at different points of the workpiece (10),
**characterized in that**,
the workpiece rotation speed ($n_{KW}$) is varied or set to obtain an optimal machining with one rotary-milling tool (15, 16, 21, 22) and the tool rotation speed of the second and each further rotary-milling tool (15, 16, 21, 22) is controlled dependently upon the workpiece rotation speed ($n_{KW}$) predetermined by the setting or varying.

**2.** Method according to claim 1, characterized in that for each machining operation of the rotary-milling tools (15, 16, 21, 22) carried out at succeeding times the optimum workpiece rotation speed is determined and then the lowest of the determined workpieces rotation speeds is adjusted, whereby tool rotation speeds of the others (15, 16, 21, 22) for which respective higher workpiece rotation speeds have been determined being correspondingly set, whereby preferably the higher tool rotation speed can be the determined optimal tool rotation speed or a lower tool rotation speed lying above a lower limit and/or that with all simultaneously performed machining operations a constant chip thickness ($h_{max}$) of 0,1 to 0,3 mm, preferably 0,2 to 0,25 mm, is established by the advance of the rotary miller.

**3.** Method according to one of claims 1 or 2, characterized in that, with two rotary-milling tools which simultaneously perform milling operations the speed profile (40) of the workpiece is determined in relation to the predetermined chip thickness ($h_{max}$) and the constant tool rotation speed ($v_c$) of a first rotary milling tool in dependence to the cutting size of a crankshaft in view to maximize the service life of the rotary milling tool and the tool rotation speed of the second rotary-milling tool is set in accordance with this speed profile.

**4.** Method according to one of claims 1 to 3, characterized in that the variation of the workpiece rotation speed is changed linearly between two limits and/or that the amounts of time for which an optimal workpiece rotation speed is determined are established depending on the changes of the workpiece contours to be machined, in particular the cheek shape.

**5.** Method according to one of claims 1 to 4, characterized in that the rotary tools (15, 16, 21, 22) are set next to one another for the simultaneous machining of pin journals, main journals, and/or cheeks of a crankshaft (10) and/or that each tool is moved along at least one axis depending on the angular position of the workpiece (10) so that as a result of or after machining there is a cylindrical shape.

**6.** Method according to one of claims 1 to 5, characterized in that the cutting arc length, that is the portion of the workpiece in contact with the respective cutting insert relative to its overall circumference is only 1/10 to 1/1000 of the overall circumference.

**7.** Method according to one of claims 1 to 6, characterized in that in a first step all right-hand shapes and in a second step all left shapes of the profile, that is the finished, shapes are produced and/or that a machining step is carried out as orthogonal rotary milling.

**8.** Method according to one of claims 1 to 7, characterized in that the cutting inserts are moved at an effective cutting angle ($\gamma_f$) between -5° and +15°, preferably -5° to +5°, relative to the workpiece (10) and/or that the back rake angle ($\gamma_p$) is $\geq 0°$, preferably a maximum of 10°.

**9.** Method according to one of claims 1 to 8, characterized in that the sum of the clearance angle ($\alpha$) and of the wedge angle ($\beta$) of the cutting inserts is 75° to 95°, preferably 85° to 95° and/or that when machining cylindrical workpieces lying eccentric to the workpiece axis, such as pin journals, the different chip thickness produced from the guiding of the rotary-milling tool relative to the workpiece are compensated for by varying the feed rate and/or the tool rotation speed of the rotary milling tool.

10. Apparatus for rotary milling with a plurality of lathe-mounted supports (19, 20) for tools (15, 16, 21, 22) provided with cutting inserts, characterized in that the rotary drives for the tools are each connected with a rotation speed regulator, whereby preferably at least one support has two slides (25, 16, 27, 29) which make possible movement of the workpiece in two mutually perpendicular directions.

**Revendications**

1. Procédé de fraisage par rotation de pièces (10) telles que vilebrequins ou pièces semblables qui, durant l'usinage, sont tournées autour de leur propre axe, du moins deux outils de fraisage par rotation (15, 16, 21, 22) travaillant l'un indépendamment de l'autre effectuant en même temps des usinages par enlèvement de copeaux à des endroits différents de la pièce (10),
   **caractérisé par le fait**
   que la vitesse de rotation ($n_{KW}$) de la pièce est adaptée ou variée par égard à un usinage optimal par enlèvement de copeaux d'un outil de fraisage par rotation (15, 16, 21, 22) et que la vitesse de rotation du deuxième et de chaque autre outil de fraisage par rotation (15, 16, 21, 22) est réglée en fonction de la vitesse de rotation ($n_{KW}$) de la pièce, qui est prédéterminée par l'adaptation ou la variation.

2. Procédé selon la revendication 1, caractérisé par le fait que, pour chaque usinage par enlèvement de copeaux des outils de fraisage par rotation (15, 16, 21, 22), la vitesse optimale de rotation de la pièce est déterminée respectivement à intervalles et la plus faible vitesse des vitesses de rotation déterminées de la pièce est ensuite réglée, les vitesses de rotation des autres (15, 16, 21, 22) dans le cas desquels on a déterminé des vitesses de rotation respectivement plus élevées de la pièce étant réglées de manière correspondante, de préférence la vitesse respectivement plus élevée de la pièce ou une vitesse au-dessous de cela mais au-dessus d'une valeur limite inférieure pouvant être la vitesse optimale déterminée, et/ou que - dans le cas de tous les usinages par enlèvement de copeaux, effectués en même temps - une épaisseur constante de coupe ($h_{max}$) comprise entre 0,1 et 0,3 mm, de préférence entre 0,2 et 0,25 mm est réglée par l'avance de l'outil de fraisage par rotation.

3. Procédé selon l'une des revendications 1 ou 2, caractérisé par le fait que, dans le cas de deux outils de fraisage par rotation qui effectuent en même temps des opérations d'usinage par enlèvement de copeaux, le profil de vitesse (40) de la pièce est déterminé de l'épaisseur prédeterminée de coupe ($h_{max}$) et de la vitesse constante de rotation ($v_c$) d'un premier outil de fraisage par rotation en fonction de la mesure de coupe, en particulier dans le cas de l'usinage par enlèvement de copeaux d'une flasque (face latérale) sur un vilebrequin, en vue de maximiser la vie utile de l'outil de fraisage par rotation, et que la vitesse de rotation du deuxième outil de fraisage par rotation est réglée conformément à ce profil de vitesse (40).

4. Procédé selon l'une des revendications 1 à 3, caractérisé par le fait que les changements de la vitesse de rotation de la pièce sont modifiés linéairement entre deux réglages, et/ou que les intervalles auxquels une vitesse optimale de rotation de la pièce est respectivement déterminée, sont accordés en fonction du changement des contours à usiner de la pièce, en particulier du contour de la flasque (face latérale).

5. Procédé selon l'une des revendications 1 à 4, caractérisé par le fait que les outils de fraisage par rotation (15, 16, 21, 22) sont utilisés l'un à côté de l'autre pour l'usinage simultané de tourillons de levage, de tourillons principaux et/ou de flasques (faces latérales) sur un vilebrequin (10), et/ou que chaque outil est déplacé sur du moins un axe en fonction de l'angle de rotation de la pièce (10) de telle manière que l'on obtient un contour cylindrique par ou bien après l'usinage par enlèvement de copeaux.

6. Procédé selon l'une des revendications 1 à 5, caractérisé par le fait que la longueur de l'arc de coupe, c'est-à-dire la longueur de l'outil, qui est en prise avec les inserts de coupe correspondants par rapport à sa circonférence totale, n'est que de 1/10 à 1/1000 de la circonférence totale.

7. Procédé selon l'une des revendications 1 à 6, caractérisé par le fait que l'on fabrique dans une première opération tous les contours droits et dans une deuxième opération tous les contours gauches du profil, c'est-à-dire du contour fini, et/ou qu'une opération d'usinage est effectuée comme fraisage orthogonal par rotation.

8. Procédé selon l'une des revendications 1 à 7, caractérisé par le fait que les inserts de coupe sont guidés sous un angle effectif de coupe ($\gamma_f$) compris entre - 5° et +15°, de préférence entre -5° et +5°, par rapport à la pièce (10), et/ou que l'angle de coupe vers l'arrière d'outil ($\gamma_p$) est $\geq$ 0°, de préférence de +10° au maximum.

9. Procédé selon l'une des revendications 1 à 8, caractérisé par le fait que la somme de l'angle de dépouille ($\alpha$) et de l'angle de taillant ($\beta$) des inserts de coupe est comprise entre 75° et 95°, de préférence entre 85° et 95°, et/ou que, lors de l'usinage de parties cylindriques de la pièce qui sont situées de façon excentrique par rapport à l'axe de rotation de la pièce, telles que paliers de levage, les épaisseurs différentes de coupe résultant du guidage de l'outil de fraisage par rotation relatif à la pièce sont compensées par une variation de l'avance et/ou de la vitesse de rotation de l'outil de fraisage par rotation.

10. Dispositif pour le fraisage par rotation, comprenant plusieurs supports (19, 20) pourvus d'un mécanisme d'entraînement par rotation, pour les outils (15, 16; 21, 22) munis d'inserts de coupe, caractérisé par le fait que les mécanismes d'entraînement par rotation pour les outils sont reliés respectivement à un dispositif de réglage du nombre de tours, de préférence un support du moins présentant deux chariots (25, 26; 27, 28) qui permettent que l'outil est déplaçable dans deux directions verticales l'une à l'autre.

Fig. 1

100

26

23    10

25            15    19

21

11            17

12

14

22

14

18            27

20            28

16    24

Fig. 2

Fig. 3

Fig. 4

FIG. 5